# EUROPEAN PATENT SPECIFICATION

(11) **EP 2 837 511 B1**
(45) Date of publication and mention of the grant of the patent: **26.04.2017**
(21) Application number: 13788115.7
(22) Date of filing: 07.05.2013
(51) Int. Cl.: B60C 19/08, B60C 11/00, B29D 30/52

(54) **PNEUMATIC TIRE**
LUFTREIFEN
PNEUMATIQUE

(30) Priority: 09.05.2012 JP 2012107874
(43) Date of publication of application: 18.02.2015
(73) Proprietor: Sumitomo Rubber Industries, Ltd., Kobe-shi, Hyogo 651-0072 (JP)
(72) Inventor: KOHARA Kei, Kobe-shi Hyogo 651-0072 (JP)
(74) Representative: Manitz, Finsterwald & Partner GbR
(86) International application number: PCT/JP2013/062837
(87) International publication number: WO 2013/168704

(56) References cited:
- WO-A1-2008/026337
- JP-A- 2009 126 291
- JP-A- 2009 161 070

## Description

### [Technical Field]

The present invention relates to a pneumatic tire that may efficiently discharge static electricity accumulated in a vehicle body while preventing separation between a conductive portion and a cap rubber in a tread rubber.

### [Background Art]

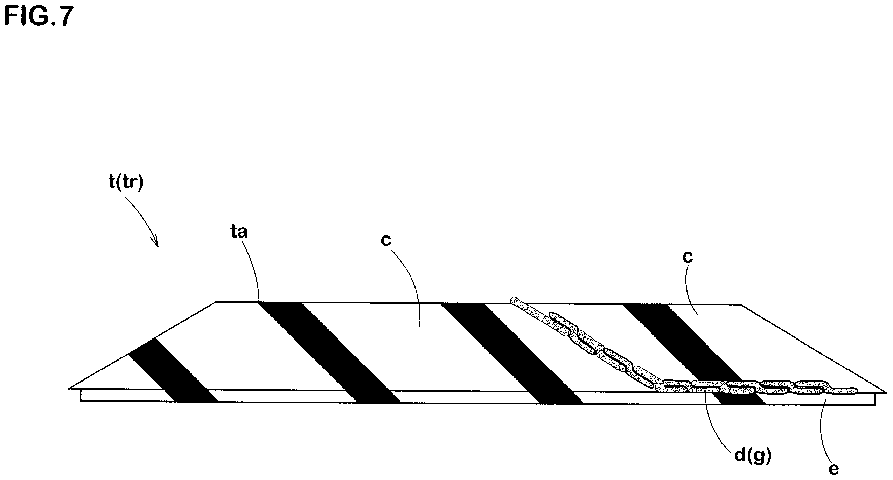

Typically, a pneumatic tire has a tread rubber having non-conductive property. This may cause static charge in a vehicle body and then produce radio disturbances such as radio noise. As shown in FIG. 7, a pneumatic tire (t) having a tread portion (tr) which comprises a cap portion (c) having a non-conductive property, and a conductive portion (d) is proposed, for instance. The cap portion (c) includes a tread surface (ta) which comes into contact with the ground. The conductive portion (d) includes one end exposed at the tread surface (ta) and the other end connected to a conductive tire element (e) which is electrically communicated with a rim when the tire is mounted on the rim. The pneumatic tire (t) may discharge static electricity accumulated in a vehicle body to the ground.

The conductive portion (d) of the pneumatic tire (t) described above is formed of a strip wound body in which a simplex ribbon-like rubber strip is spirally wound. The bonding surface between the conductive portion (d) and the cap portion (c) tends to have a smooth surface which produces less friction therebetween. Additionally, since the rubber material of the conductive portion (d) differs from that of the cap portion (c), a bonding strength between the conductive portion (d) and the cap portion (c) tends to become small. The relevant prior arts are as follows.
US 2009/0173419 A1 discloses a pneumatic tire in accordance with the preamble of claim 1.

### [Related Art Documents]

### [Patent Documents]

[Patent Document 1] Japanese Unexamined Patent Application Publication 2009-126291
[Patent Document 2] Japanese Unexamined Patent Application Publication 2008-13000

### [Summary of the Invention]

### [Problem to be Solved by the Invention]

The present invention has been worked out in light of the circumstances described above, and has a main object of providing a pneumatic tire that may efficiently discharge static electricity accumulated in a vehicle body while preventing separation between a conductive portion and a cap rubber by improving a configuration of a conductive portion which extends from a tread surface to a conductive tire element through between a first cap portion and a second cap portion, and its rubber material.

### [Means for Solving the Problem]

In accordance with the present invention, a pneumatic tire comprising a toroidal carcass extending to a bead core of a bead portion through a sidewall portion from a tread portion , and a tread rubber disposed radially outward of the carcass, the tread rubber comprising a cap portion having a tread surface for coming into contact with a road, and an electrically conductive portion having a first end exposed at the tread surface and a second end connected with an electrically conductive tire element which is electronically communicated with a rim when the tire is mounted on the rim, in a tire meridian cross-section, the cap portion being axially separated so as to form a first cap portion and a second cap portion, the conductive portion extending from the tread surface to-the conductive tire element through between the first cap portion and the second cap portion, the conductive portion formed of a strip wound body such that a rubber strip is spirally wound, and the rubber strip comprising a wide strip having an electrically conductive property, and a narrow strip having a width smaller than a width of the wide strip and disposed radially outward on the wide strip, the narrow strip made of the same rubber material as the first cap portion and/or the second cap portion to which the narrow strip is joined. Each of the wide strip and the narrow strip is formed of a ribbon like shape having a constant thickness.

In accordance with the invention, the conductive portion is formed such that the wide strip is overlapped on the narrow strip of the rubber strip. Thus, in the cross section of the conductive portion, the narrow strip is sandwiched between the wide strips. In the cross section of the conductive portion, a pair of adjacent wide strips comprise portions that extend in parallel with each other on opposite sides of the sandwiched narrow strip.

In another aspect of the invention, the rubber strip may be a laminated strip in which the wide strip formed of an extrusion and the narrow strip formed of an extrusion are joined one another.

In another aspect of the invention, the rubber strip may comprise the narrow strip having axially both ends positioned axially inwardly with respect to axially both ends of the wide strip.

In another aspect of the invention, the narrow strip may have the width in a range of from 35% to 80% of the width of the wide strip.

In another aspect of the invention, the cap portion may be made of a rubber having a non-conductive property.

### [Effect of the Invention]

As described above, the tread rubber of the pneumatic tire in accordance with the present invention includes the cap portion having the tread surface coming into contact with the ground, and the conductive portion having the first end exposed at the tread surface and the second end connected with the conductive tire element which is electronically communicated with a rim when the tire is mounted on the rim. Thus, the tire may efficiently discharge static electricity accumulated in a vehicle body through the conductive portion.

Additionally, the cap portion is axially separated so as to form the first cap portion and the second cap portion in a tire meridian cross-section. The conductive portion extends from the tread surface to the conductive tire element through between the first cap portion and the second cap portion. The conductive portion comprises a strip wound body such that a rubber strip is spirally wound. Furthermore, the rubber strip comprises the wide strip having a conductive property, and the narrow strip having a width smaller than a width of the wide strip and disposed radially outwardly on the wide strip, wherein the narrow strip is made of the same rubber material as the first cap portion and/or the second cap portion to which the narrow strip is joined. Thus, the radially outer surface of the rubber strip is shaped having an uneven surface. Accordingly, the cap portion and the rubber strip joined thereto may firmly engage each other to produce a large friction therebetween, thereby preventing separation between the conductive portion and the cap rubber.

Furthermore, the narrow strip is made of the same rubber material as the first cap portion and/or the second cap portion to which the narrow strip is joined. Therefore, excellent bonding strength may be offered on the bonding surface between the narrow strip and the first and/or second cap portion(s) so as to form a completely joint after vulcanizing, for instance.

### [Brief Description of the Drawings]

FIG. 1 is a tire meridian cross-sectional view of a pneumatic tire in accordance with an embodiment of the present invention;
FIG. 2 is a cross sectional view of a tread rubber in accordance with an embodiment;
FIG. 3A is an enlarged cross sectional view of a rubber strip for forming a conductive portion shown in FIG. 2;
FIG. 3B is an enlarged cross sectional view of the rubber strip in accordance with another embodiment of the embodiment;
FIG. 4 is a cross sectional view of a core;
FIGs. 5A and 5B are cross sectional views to explain a method for molding a green tire;
FIG. 6 is a cross sectional schematic view illustrating an apparatus for producing the rubber strip in accordance with an embodiment, and
FIG. 7 is a cross sectional view illustrating a tread portion of a conventional pneumatic tire.

### [Mode for Carrying out the Invention]

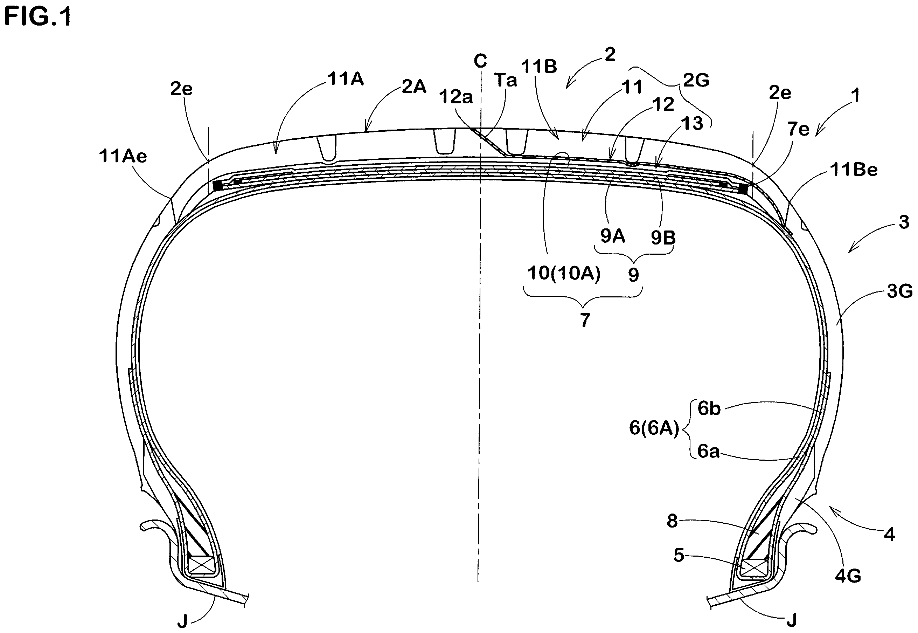

An embodiment of the present invention will be explained below with reference to the accompanying drawings. As shown in FIG. 1, a pneumatic tire (hereinafter, it may be simply referred to the "tire") 1 in accordance with the present embodiment is exampled as a tire for passenger cars. The tire 1 includes a toroidal carcass 6 extending to a bead core 5 of a bead portion 4 from a tread portion 2 through a sidewall portion 3, and a tread reinforcing cord layer 7 disposed radially outward of the carcass 6 in the tread portion 2. The present invention may be applied as a heavy-load tire.

The carcass 6 comprises one radial carcass ply 6A including a toroidal main portion 6a, and a pair of turn-up portions 6b. The main portion 6a extends between the bead cores 5 and 5. Each turn-up portion 6b is turned up around the bead core 5 from the axially inside to outside of the tire. A radially tapering bead apex rubber 8 is disposed between the main portion 6a and the turn-up portion 6b in each bead portion 4.

The tread reinforcing cord layer 7 includes a belt layer 9, and a band layer 10 disposed radially outward of the belt layer 9. The belt layer 9 includes at least two belt plies each having a plurality of steel cords arranged at an angle of from 15 to 40 degrees with respect to a circumferential direction of the tire. The belt layer 9 in accordance with the present embodiment includes two belt plies 9A and 9B which are disposed in a radial direction of the tire. The band layer 10 includes a band ply 10A having a cord arranged in the circumferential direction of the tire. The band layer 10 may be eliminated from the tire.

Each of the carcass ply 6A, belt plies 9A and 9B, band ply 10A is comprised of cords coated with a topping rubber. The topping rubber contains fillers having an electrically conductive property such as carbon black, for instance. Preferably, the topping rubber has a sufficient electrically conductive property which has a volume resistivity of less than 1.0x10⁸ (Ω·cm) after vulcanization.

In this specification, "electrically conductive property" means a property of a material which can substantially transmit electricity. Specifically, a material having an electrically conductive property means a material having a volume resistivity of less than 1.0x10⁸ (Ω·cm). On the contrary, "non electrically conductive property" means a property of a material which cannot substantially transmit electricity. Specifically, a material having a non electrically conductive property means a material having a volume resistivity of not less than 1.0x10⁸ (Ω·cm). Here, the volume resistivity of rubber is measured with an ohm meter, using a specimen of 15cm x 15cm x 2 mm, under the following conditions: applied voltage 500 V, temperature 25 deg. C, and relative humidity 50%.

The sidewall portion 3 is provided with a sidewall rubber 3G so as to form an outer surface thereof. The bead portion 4 is provided with a clinch rubber 4G so as to cover the turn-up portion 6B of the carcass ply 6A. The radially outer end of the clinch rubber 4G is joined to the sidewall rubber 3G. The clinch rubber 4G directly comes into contact with a rim J made of a metallic material.

Since both of the sidewall rubber 3G and the clinch rubber 4G contain fillers of carbon black, each of these rubber 3G and 4G has an excellent electrically conductive property having a volume resistivity of less than 1.0x10⁸ (Ω·cm) after vulcanization.

A tread rubber 2G is disposed radially outward of the carcass 6. In this embodiment, the tread rubber 2G is disposed radially outward of the band layer 10.

In this embodiment, the tread rubber 2G includes a cap portion 11, an electrically conductive portion 12, and a base portion 13. The cap portion 11 includes a main part of a tread surface 2A for coming into contact with the ground. The electrically conductive portion 12 includes a first end exposed at the tread surface 2A and a second end connected with a conductive tire element which is electronically communicated with the rim J when the tire is mounted on the rim J. The base portion 13 is disposed between the cap portion 11 and the band layer 10.

Each of the cap portion 11 and the base portion 13 is made of a non electrically conductive rubber. For instance, each of the cap portion 11 and the base portion 13 is made of a silica-rich compound rubber. Thus, the cap portion 11 may exhibit an excellent wet grip performance of the tire. The base portion 13 may offer not only low heat generation but also low rolling resistance. Accordingly, the cap portion 11 and the base portion 13 may exhibit excellent traveling performance of the tire.

As to the rubber polymers of the cap portion 11 and the base portion 13, various polymers, e.g. natural rubber (NR), butadiene rubber (BR), styrene butadiene rubber (SBR), synthesis polyisoprene rubber (IR), nitrile rubber (NBR), chloroprene rubber (CR) and the like can be used alone or in combination.

In view of the reinforcing effect and the processability of the rubber compound, it is preferable for the silica compounded into the cap and base portions 11 and 13 that the BET surface area determined from nitrogen adsorption is in a range of from 150 to 250 m²/g, and further it shows colloidal characteristic having the dibutyl phthalate (DBP) oil absorption is not less than 180ml/100g.

In this embodiment, the base portion 13 is disposed on the band ply 10A. The base portion 13 has a width larger than that of the tread reinforcing cord layer 7. The base portion 13 axially extends in continuous fashion. The base portion 13 has axially both ends extending in a tapered manner. For instance, the ends of the base portion 13 are located axially outwardly with respect to tread edges 2e.

In this specification, the tread edges Te mean the axial outermost edges of the ground contacting patch of the tire which occurs under a condition of the tire such that the tire is mounted on a standard wheel rim J with a camber angle of zero and inflated to a standard pressure and loaded with a standard tire load.

The standard wheel rim means a wheel rim officially approved or recommended for the tire by standards organizations, and the standard wheel rim is the "standard rim" specified in JATMA, the "Measuring Rim" in ETRTO, and the "Design Rim" in TRA or the like, for example. The standard pressure means an internal pressure of the tire officially approved or recommended for the tire by standards organizations, and the "maximum air pressure" in JATMA, the "Inflation Pressure" in ETRTO, and the maximum pressure given in the "Tire Load Limits at Various Cold Inflation Pressures" table in TRA or the like.

The standard load means a tire load officially approved or recommended for the tire by standards organizations, and the "maximum load capacity" in JATMA, the "Load Capacity" in ETRTO, and the maximum value given in the above-mentioned table in TRA or the like. In case of passenger car tires, however, the standard tire load is uniformly defined by 88 % of the maximum tire load.

The cap portion 11 includes a first cap portion 11A (the left side) and a second cap portion 11B (the right side) which are axially spaced so that the conductive portion 12 is inserted therebetween. In this embodiment, the first cap portion 11A includes an inclined surface Ta which extends radially inwardly from the tread surface 2A so as to cross the tire equatorial plane.

Respective axially outer ends 11Ae and 11Be of the first cap portion 11A and the second cap portion 11B are positioned axially outwardly with respect to the respective tread edges 2e and 2e. Thus, the tread surface 2A in accordance with the present embodiment is constituted by respective radially outer surfaces of the first cap portion 11A, second cap portion 11B and conductive portion 12.

In this embodiment, the conductive portion 12 extends radially inwardly from the tread surface 2A through between the first cap portion 11A and the second cap portion 11B. Additionally, the conductive portion 12 extends between the second cap portion 11B and the base portion 13 and terminates at between the sidewall rubber 3G and the carcass ply 6A. Thus, the conductive portion 12 is electronically communicated with the rim J through a conductive tire element when the tire 1 is mounted on the rim J. The conductive tire element in accordance with the present embodiment includes the sidewall rubber 3G, the carcass ply 6A, and the clinch rubber 4G. Accordingly, the static charged in the vehicle body may be discharged to the ground through an electrical path constituted by the rim J, the clinch rubber 4G, the carcass ply 6A, the sidewall rubber 3G, and the conductive portion 12.

The conductive portion 12 has a first end 12a exposed at the tread surface 2A in the cross sectional view shown in FIG. 1. The first end 12a continuously extends in the circumferential direction of the tire. Thus, the conductive portion 12 may continuously come into contact with the ground during tire traveling. Furthermore, since the first end 12a of the conductive portion 12 is provided in the vicinity of the tire equator C, the first end 12a may come into contact with the ground during not only straight traveling ahead but also cornering.

The conductive portion 12 is formed of a strip wound body in which a rubber strip 14 is spirally wound and stacked.

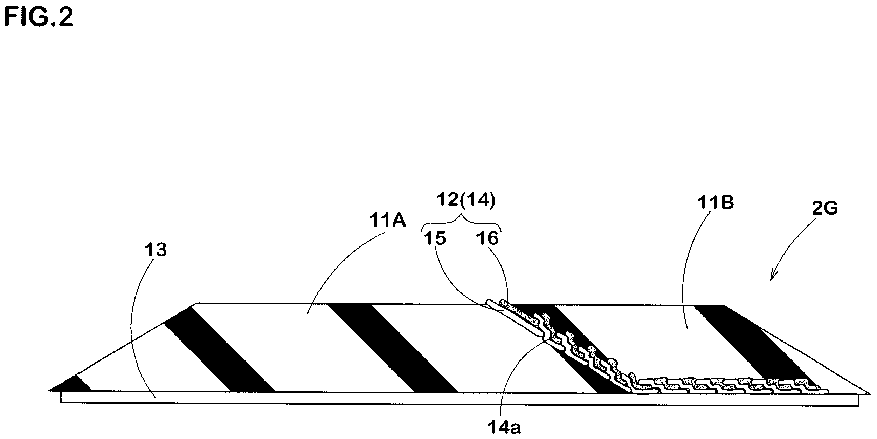

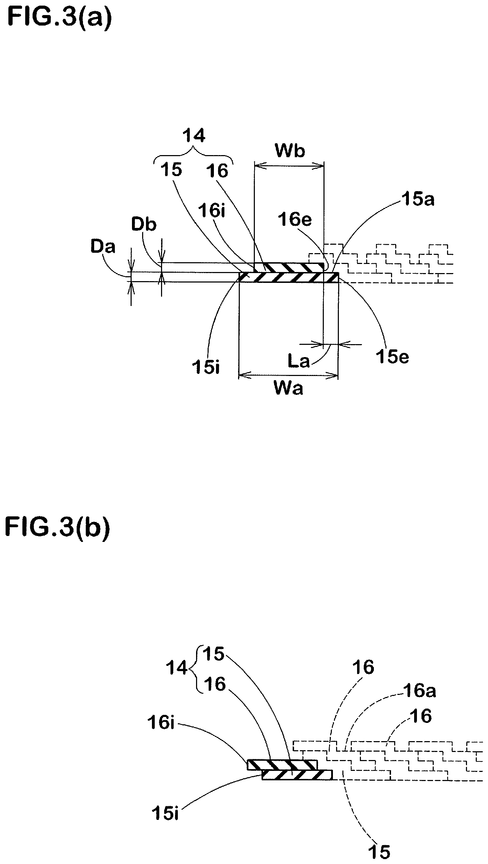

As shown in FIG.2 and FIG. 3A, the rubber strip 14 in accordance with the present embodiment comprises a wide strip 15 having a ribbon like shape, and a narrow strip 16 having a ribbon like shape with a width smaller than a width of the wide strip 15. The narrow strip 16 is disposed on the radially outer surface of the wide strip 15. Thus, the rubber strip 14 for forming the conductive portion 12 includes an uneven surface on its radially outer surface 14a. The uneven surface of the rubber strip 14 may complexly engage with the cap portion 11 so as to generate a large friction at the bonding surface. Accordingly, the separation between the conductive portion 12 and the cap portion 11 may be prevented. In this embodiment, the uneven surface of the rubber strip 14 complexly engages with the second cap portion 11B.

In this embodiment, the wide strip 15 is made of a carbon black rich rubber composition so as to have an excellent electrically conductive property. Namely, the electrically conductive property of the conductive portion 12 is given by the wide strip 15. The narrow strip 16 is made of the same rubber material as the second cap portion 11B to which the narrow strip 16 is joined. For instance, the narrow strip 16 may be made of a silica rich rubber composition. Thus, the narrow strip 16 and the second cap portion 11B are firmly joined at its bonding surface. Additionally, the narrow strip 16 and the second cap portion 11B are joined in completely harmony through vulcanization process. Thus, the separation between the conductive portion 12 and the cap portion 11 may further be prevented.

As shown in FIG. 3A, the width Wa of the wide strip 15 is preferably in a range of not less than 5 mm, more preferably not less than 10 mm, but preferably not more than 40 mm, more preferably not more than 30 mm. Such a wide strip 15 having a width mentioned above may efficiently discharge static electricity while improving productivity of the tire. In the same point of view, the thickness Da of the wide strip 15 is preferably in a range of not less than 0.4 mm, more preferably not less than 0.6 mm, but preferably not more than 2.0 mm, more preferably not more than 1.4 mm.

In the rubber strip 14 for forming the conductive portion 12, at least one end 16e (the right side) in the width direction of the narrow strip 16 is preferably positioned inwardly in the width direction with respect to at least one end 15e of the wide strip 15 so that a part of the wide strip 15 is exposed at outer surface of the rubber strip 14. Thus, the contact area between two overlapped wide strips 15 and 15 is increased when the rubber strip 14 is spirally wound overlapped, thereby improving bonding strength of the overlapped rubber strips as well as electrically conductive property thereof.

In this embodiment, the respective ends 16e and 16i of the narrow strip 16 in the width direction are positioned inward of the respective ends 15e and 15i of the wide strip 15. Such a rubber strip 14 may achieve the advantages described above without regard to a winding direction thereof.

The rubber strip 14 for forming the conductive portion 12 is wound such that the wide strip 15 is overlapped on the narrow strip 16. Thus, in the cross section of the conductive portion 12, the narrow strip 16 is sandwiched between the wide strips 15. This configuration can generate higher friction force between the wide strip 15 and the narrow strip 16 to prevent separation therebetween.

In order to further improve the advantages described above, the narrow strip 16 preferably has the width Wb in a range of from not less than 35%, more preferably not less than 60%, but preferably not more than 80%, more preferably not more than 70% of the width Wa of the wide strip 15. In the same point of view, the narrow strip 16 preferably has a thickness Db in a range of not less than 50%, more preferably not less than 60%, but preferably not more than 150%, more preferably not more than 140% of the thickness Da of the wide strip 15.

Preferably, the length La in the width direction between the end 15e of the wide strip 15 and the end 16e of the narrow strip 16 is in a range of not less than 10%, more preferably not less than 15%, but preferably not more than 25%, more preferably not more than 20% of the width W1 of the wide strip 15. Thus, discharging static electricity accumulated in a vehicle body, and productivity of the tire can be improved.

As shown in FIG. 3B, in another aspect of the embodiment, the end 16i (the left side end in this embodiment) of the narrow strip 16 of the rubber strip 14 may be positioned outward of the corresponding end 15i of the wide strip 15. When such a rubber strip 14 is wound while having an overlap portion one another, the narrow strip 16 may be overlapped on the narrow strip 16 which is adjacent in width direction thereof. Thus, the narrow strips 16 and 16 are bonded one another, and separation between the wide strip 15 and the narrow strip 16 may further be prevented. Furthermore, separation between the conductive portion 12 and the cap portion 11 may further be prevented.

Next, the method for manufacturing the pneumatic tire 1 including the tread rubber 2G will be described. The pneumatic tire 1 in accordance with the present embodiment is manufactured using a rigid core N for molding a green tire thereof.

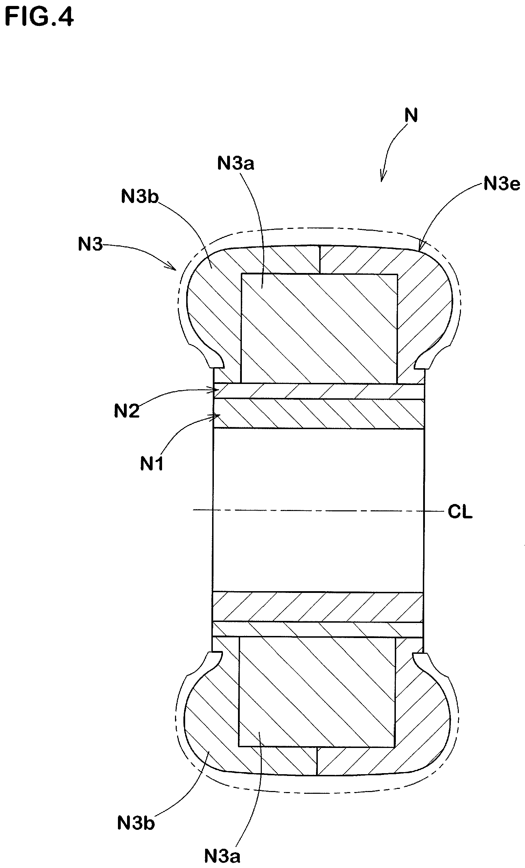

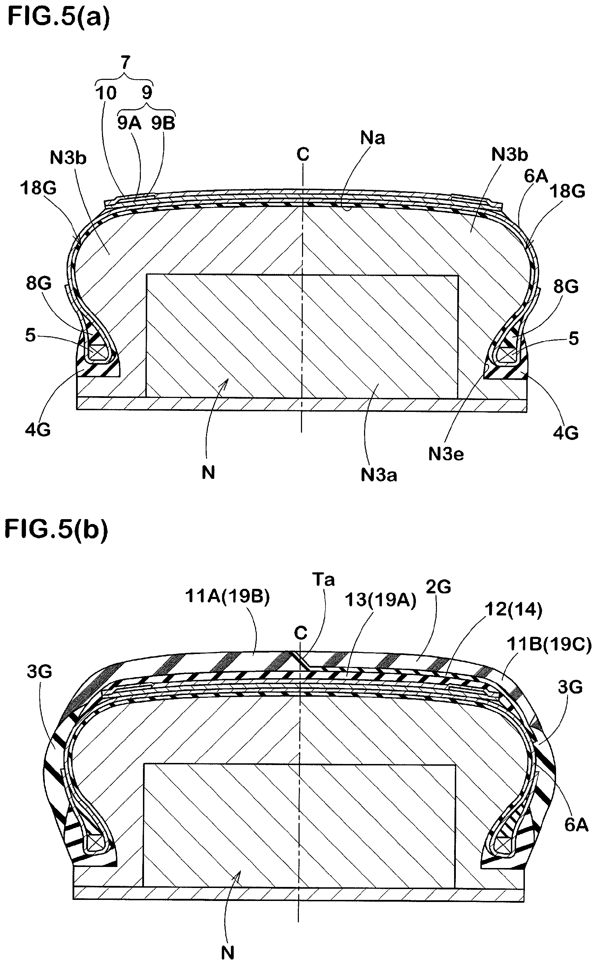

FIG. 4 illustrates the core N which may include a well-known configuration. The core N, for instance, includes a circumferentially and continuously extending inner ring N1 having a central axis corresponding to the tire rotation axis CL of the tire to be molded, a circumferentially and continuously extending middle ring N2 fitted on the inner ring N1, and a circumferentially extending outer ring N3 fitted on the middle ring N2. The outer ring N3 includes an outer surface N3e for molding an inner surface Na (shown in FIG. 5A) of the tire 1. The outer ring N3 further includes a core piece unit N3a, and a pair of segment units N3b and N3b arranged axially outward of the core piece unit N3a to cover it. Each of the core piece units N3a and segment unit N3b comprises a plurality of arc-shaped segment pieces which are circumferentially arranged to form a substantially continuous ring shape.

As shown in FIG. 5A, the clinch rubber 4G which comes into contact with the rim J, the carcass ply 6A, the bead cores 5, the bead apex rubbers 8G, and the tread reinforcing cord layer 7 are arranged in a certain order on the outer surface N3e of the core N to form a green base tire. An inner liner rubber 18G may be disposed radially inward of the carcass ply 6A. Then, the respective ends of the carcass ply 6A may be turned up around the respective bead cores 5 after the bead apex rubbers 8 are arranged. The clinch rubber 4G, bead apex rubbers 8G, and the inner liner rubber 18g may be formed by spirally winding a respective ribbon-like rubber strip.

Then, as shown in FIG. 5B, a process for forming a tread rubber is practiced. In this embodiment, the process further includes respective processes for forming the conductive portion 12, the base portion 13, the first cap portion 11 A, and the second cap portion 11B by spirally winding ribbon-like rubber strips 14, 19A, 19B, and 19C, respectively.

Specifically, the rubber strip 19A is firstly wound to form the base portion 13 of the tread rubber 2G. Then, the rubber strip 19B is wound on the base portion 13 at one side (the left side) of the tread edges 2e to form the first cap portion 11A.

Then, the process for forming the conductive portion 12 is practiced by spirally winding the rubber strip 14 while having an overlapping one another. In this embodiment, the rubber strip 14 is continuously wound from the tread surface to the carcass ply 6A through the inclined surface Ta of the first cap portion 11A and the radially outer surface of the base portion 13.

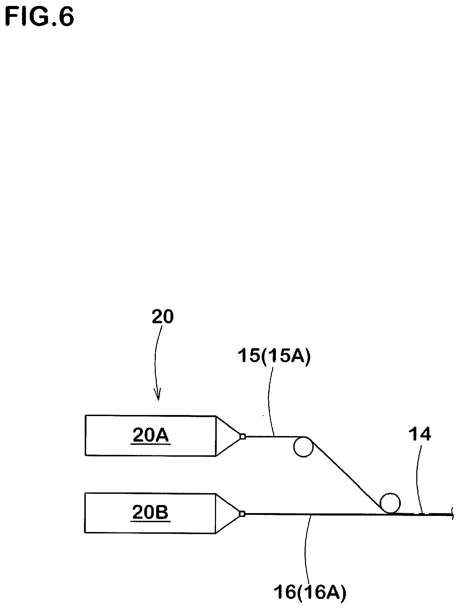

As shown in FIG. 6, the rubber strip 14 is continuously supplied to the core N from a rubber strip forming device 20. The device 20 includes two independent first and second rubber extruders 20A and 20B. The first rubber extruder 20A and the second rubber extruder 20B can extrude the wide strip 15 and the narrow strip 16, respectively. The wide strip 15 and the narrow strip 16 are joined one another to form a single piece of rubber strip 14.

Then, the second cap portion 11B is formed by spirally winding the rubber strip 19B on the conductive portion 12, whereby the tread rubber 2G is formed.

Each of the rubber strips 19A, 19B, and 19C is preferably made of one kind of rubber material and forms a single rubber strip. Preferably, each of the rubber strips 19A, 19B, and 19C is spirally and continuously wound from one side to the other side in the axial direction of the tire while having an overlapping portion one another.

Then, the sidewall rubber 3G is arranged axially outward of the carcass ply 6A in the sidewall region, whereby the green tire is formed. Then, the green tire with the core N is vulcanized to produce the pneumatic tire 1.

While the particularly preferable embodiments of the pneumatic tire in accordance with the present invention have been described in detail, the present invention is not limited to the illustrated embodiments, but can be modified and carried out in various aspects. For instance, the tire 1 may be manufactured using any conventional methods or a tire drum for molding a green tire without using the core N. In this case, a tread member having a ring shape, which comprises the tread reinforcing cord layer 7, base portion 13, first cap portion 11A, conductive portion 12, and second cap portion 11B, is built on the tire drum, and then it is assembled on the toroidal carcass to form a green tire. Then the green tire is vulcanized in a tire mold to manufacture a pneumatic tire (not shown).

Furthermore, as a rubber strip 14 for forming the conductive portion 12, the narrow strip 16 may have one end 16i aligned with the corresponding end 15i of the wide strip 15 and the other end 16e arranged axially inward of the corresponding end 15e of the wide strip 15 may be used (not shown).

For instance, the base portion 13 may be composed of rubber material having an excellent electrically conductive property in order to efficiently discharge static electricity to the ground.

### Comparison Test

Pneumatic tires each having a size of 195/65R15 with a basic structure shown in FIG. 1 except for the detail shown in Table 1 were made and performed a high-temperature separation resistance test and a vehicle running test. The major specifications of tires are as follows.
Material of first and second cap portion: non-conductive rubber
Material of wide strip: conductive rubber
Width of wide strip Wa: 24 mm
Thickness of wide strip Da: 1.0 mm
Material of narrow strip: non-conductive rubber made of the same compound as first and second cap portions.

### High-temperature separation resistance test:

Each of the test tires was put in an oven controlled at a temperature of 80 deg. C and a relative humidity of 95 % for 20 days. Then, using a tire test drum, each tire was run at a speed of 100 km/h with a slip angle of 2 deg. for 30 hours. Then, the difference between outer surfaces of the conductive portion and the cap portion was measured. The result was shown using three grades as follows.
A: No difference was measured.
B: The difference was less than 1.0 mm.
C: The difference was not less than 1.0 mm.

### Vehicle running test:

A respective set of four test tires was installed to a front-wheel drive passenger car having a displacement of 2,000 cc. Then, using the passenger car, 8-figure test was performed at a speed of 50 km/h for 60 minutes. Then, the difference between outer surfaces of the conductive portion and the cap portion was measured. The result was shown using three grades as the same standard described above.

The test results are shown in Table 1.

**Table 1**

| | Ref.1 | Ex.1 | Ex. 2 | Ex.3 | Ex. 4 | Ex.5 | Ex.6 | Ex.7 | Ex.8 | Ex. 9 | Ex.10 |
|---|---|---|---|---|---|---|---|---|---|---|---|
| Conducive portion configuration | FIG. 7 | FIG.2 | FIG. 2 | FIG. 2 | FIG. 2 | FIG. 2 | FIG.2 | FIG. 2 | FIG. 2 | FIG. 2 | FIG. 2 |
| Rubber strip configuration | - | FIG. 3(a) | FIG.3(a) | FIG. 3(a) | FIG. 3(a) | FIG. 3(a) | FIG. 3(a) | FIG.3(a) | FIG. 3(a) | FIG. 3(a) | FIG. 3(b) |
| Strip width ratio Wb/Wa (%) | - | 65 | 20 | 35 | 80 | 82.5 | 65 | 65 | 65 | 65 | 65 |
| Ratio La/Wa (%) | - | 17.5 | 17.5 | 17.5 | 17.5 | 17.5 | 5 | 10 | 25 | 30 | 17.5 |
| High-tenperature separation resistance test [A-B-C] | C | A | B | A | A | B | B | A | A | B | A |
| Vehicle running test [A-B-C] | C | A | C | B | B | C | C | B | B | C | A |

From the test results, it was confirmed that Example tires in accordance with the present invention exhibit an excellent results of the high-temperature separation resistance test as well as the vehicle running test as compared to the Reference tire.

### [Description of the reference numerals]

- 1: Pneumatic tire
- 2A: Tread surface
- 2G: Tread rubber
- 11: Cap portion
- 12: Conductive portion
- 14: Rubber strip
- 15: Wide strip
- 16: Narrow strip

## Claims

1. A pneumatic tire (1) comprising
a toroidal carcass (6) extending to a bead core (5) of a bead portion (4) through a sidewall portion (3) from a tread portion (2), and a tread rubber (2G) disposed radially outward of the carcass (6),
the tread rubber (2G) comprising a cap portion (11) having a tread surface (2A) for coming into contact with a road, and an electrically conductive portion (12) having a first end exposed at the tread surface and a second end connected with an electrically conductive tire element which is electrically communicated with a rim (J) when the tire (1) is mounted on the rim (J),
in a tire meridian cross-section, the cap portion (11) being axially separated so as to form a first cap portion (11A) and a second cap portion (11B),
the conductive portion (12) extending from the tread surface (2A) to the conductive tire element through between the first cap portion (11A) and the second cap portion (11B), the conductive portion (12) formed of a strip wound body such that a rubber strip (14) is spirally wound, and
the rubber strip (14) comprising a wide strip (15) having an electrically conductive property, and a narrow strip (16) having a width (Wb) smaller than a width (Wa) of the wide strip (15) and disposed radially outward on the wide strip (15), the narrow strip (16) made of the same rubber material as the first cap portion (11A) and/or the second cap portion (11B) to which the narrow strip (16) is joined, wherein the rubber strip (14) is wound in such a manner that the wide strip (15) is overlapped on the narrow strip (16), with the narrow strip (16) being sandwiched between a pair of adjacent wide strips (15) in a cross section of the conductive portion (12),
**characterized in that**
each of the wide strip (15) and the narrow strip (16) is formed of a ribbon like shape having a constant thickness, and in the cross section of the conductive portion (12), a pair of adjacent wide strips (15) comprise portions that extend in parallel with each other on opposite sides of the sandwiched narrow strip (16).

2. The pneumatic tire (1) according to claim 1,
wherein the rubber strip (14) is a laminated strip in which the wide strip (15) formed of an extrusion and the narrow strip (16) formed of an extrusion are joined one another.

3. The pneumatic tire (1) according to claim 1 or 2,
wherein the rubber strip (14) comprises the narrow strip (16) having axially both ends (16e, 16i) positioned axially inwardly with respect to axially both ends (15e, 15i) of the wide strip (15).

4. The pneumatic tire (1) according to any one of claims 1 to 3,
wherein the narrow strip (16) has the width (Wb) in a range of from 35% to 80% of the width (Wa) of the wide strip (15).

5. The pneumatic tire (1) according to any one of claims 1 to 4,
wherein the cap portion (11) is made of a rubber having a non-conductive property.

## Patentansprüche

1. Luftreifen (1), umfassend
eine torusförmige Karkasse (6), die sich zu einem Wulstkern (5) eines Wulstabschnitts (4) durch einen Seitenwandabschnitt (3) von einem Laufflächenabschnitt (2) erstreckt, und einen Laufflächenkautschuk (2G), der radial außerhalb der Karkasse (6) angeordnet ist,
wobei der Laufflächenkautschuk (2G) einen Deckabschnitt (11) mit einer Laufflächenoberfläche (2A), um mit einer Straße in Kontakt zu gelangen, und einen elektrisch leitenden Abschnitt (12) umfasst, der ein erstes Ende, das an der Laufflächenoberfläche freigelegt ist, und ein zweiten Ende aufweist, das mit einem elektrisch leitenden Reifenelement verbunden ist, welches elektrisch mit einer Felge (J) in Verbindung steht, wenn der Reifen (1) auf die Felge (J) aufgezogen ist,
in einem Reifenmeridianquerschnitt der Deckabschnitt (11) axial getrennt ist, um einen ersten Deckabschnitt (11A) und einem zweiten Deckabschnitt (11 B) zu bilden,
der leitende Abschnitt (12) sich von der Laufflächenoberfläche (2A) zu dem leitenden Reifenelement hindurch zwischen dem ersten Deckabschnitt (11A) und dem zweiten Deckabschnitt (11 B) erstreckt, wobei der leitende Abschnitt (12) aus einem Streifenwickelkörper gebildet ist, so dass der Kautschukstreifen (14) spiralförmig gewickelt ist, und
der Kautschukstreifen (14) einen breiten Streifen (15) mit einer elektrischen Leitfähigkeit und einen schmalen Streifen (16) umfasst, der eine Breite (Wb) aufweist, die kleiner ist als eine Breite (Wa) des breiten Streifens (15), und radial außerhalb des breiten Streifens (15) angeordnet ist, wobei der schmale Streifen (16) aus dem gleichen Kautschukmaterial wie der erste Deckabschnitt (11A) und/oder der zweite Deckabschnitt (11 B), mit welchem der schmale Streifen (16) zusammengefügt ist, hergestellt ist, wobei der Kautschukstreifen (14) auf eine solche Weise gewickelt ist, dass der breite Streifen (15) den schmalen Streifen (16) überlappt, wobei der schmale Streifen (16) in einem Querschnitt des leitenden Abschnitts (12) zwischen einem Paar benachbarten breiten Streifen (15) angeordnet ist,
**dadurch gekennzeichnet, dass**
ein jeder von dem breiten Streifen (15) und dem schmalen Streifen (16) mit einer bandartigen Form mit konstanter Dicke gewickelt ist, und in dem Querschnitt des leitenden Abschnitts (12) ein Paar benachbarte breite Streifen (15) Abschnitte umfassen, die sich parallel zueinander auf entgegengesetzten Seiten des dazwischen angeordneten schmalen Streifens (16) erstrecken.

2. Luftreifen (1) nach Anspruch 1, wobei der Kautschukstreifen (14) ein laminierter Streifen ist, in welchem der breite Streifen (15), der aus einem Extrusionsteil gebildet ist, und der schmale Streifen (16), der aus einem Extrusionsteil gebildet ist, aneinander gefügt sind.

3. Luftreifen (1) nach Anspruch 1 oder 2, wobei der Kautschukstreifen (14) umfasst, dass beide axiale Enden (16e, 16i) des schmalen Streifens (16) axial innen mit Bezug auf beide axiale Enden (15e, 15i) des breiten Streifens (15) angeordnet sind.

4. Luftreifen (1) nach einem der Ansprüche 1 bis 3, wobei der schmale Streifen (16) eine Breite (Wb) in einem Bereich von 35% bis 80% der Breite (Wa) des breiten Streifens (15) aufweist.

5. Luftreifen (1) nach einem der Ansprüche 1 bis 4, wobei der Deckabschnitt (11) aus einem Kautschuk ohne Leitfähigkeitseigenschaft hergestellt ist.

## Revendications

1. Bandage pneumatique (1) comprenant
une carcasse toroïdale (6) qui s'étend jusqu'à une âme de talon (5) d'une portion de talon (4) via une portion de paroi latérale (3) depuis une portion formant bande de roulement (2), et un caoutchouc de roulement (2G) disposé radialement à l'extérieur de la carcasse (6),
le caoutchouc de roulement (2G) comprend une portion de coiffe (11) ayant une surface de roulement (2A) pour venir en contact avec une route, et une portion électriquement conductrice (12) ayant une première extrémité exposée au niveau de la surface de roulement et une seconde extrémité connectée à un élément électriquement conducteur du pneumatique qui est en communication électrique avec une jante (J) quand le pneumatique (1) est monté sur la jante (J),
dans une section transversale méridienne du pneumatique, la portion de coiffe (11) est axialement séparée de manière à former une première portion de coiffe (11 A) et une seconde portion de coiffe (11 B),
la portion conductrice (12) s'étend depuis la surface de roulement (2A) jusqu'à l'élément conducteur du pneumatique en traversant entre la première portion de coiffe (11A) et la seconde portion de coiffe (11 B), la portion conductrice (12) étant formée d'un corps enroulé en bande de telle façon qu'une bande en caoutchouc (14) est enroulée en spirale, et
la bande en caoutchouc (14) comprend une bande large (15) ayant une propriété électriquement conductrice, et une bande étroite (16) ayant une largeur (Wb) plus petite qu'une largeur (Wa) de la bande large (15) et étant disposée radialement à l'extérieur sur la bande large (15), la bande étroite (16) étant faite du même matériau à base de caoutchouc que la première portion de coiffe (11A) et/ou que la seconde portion de coiffe (11B) à laquelle la bande étroite (16) est unie, de sorte que le ruban en caoutchouc (14) est enroulé d'une telle manière que la bande large (15) est en chevauchement sur la bande étroite (16), et la bande étroite (16) est prise en sandwich entre une paire de bandes larges adjacentes (15) dans une section transversale de la portion conductrice (12),
**caractérisé en ce que**
chacune de la bande large (15) et de la bande étroite (16) est formée sous une forme semblable à un ruban ayant une épaisseur constante et, dans la section transversale de la portion conductrice (12), une paire de bandes larges adjacentes (15) comprennent des portions qui s'étendent parallèlement les unes aux autres sur des côtés opposés de la bande étroite (16) prise en sandwich.

2. Bandage pneumatique (1) selon la revendication 1,
dans lequel la bande en caoutchouc (14) est une bande stratifiée dans laquelle la bande large (15) formée par extrusion et la bande étroite (16) formées par extrusion sont réunies l'une à l'autre.

3. Bandage pneumatique (1) selon la revendication 1 ou 2,
dans lequel la bande en caoutchouc (14) comprend la bande étroite (16) ayant ses deux extrémités axiales (16e, 16i) positionnées axialement vers l'intérieur par rapport aux deux extrémités axiales (15e, 15i) de la bande large (15).

4. Bandage pneumatique (1) selon l'une quelconque des revendications 1 à 3,
dans lequel la bande étroite (16) a une largeur (Wb) dans une plage de 35 % à 80 % de la largeur (Wa) de la bande large (15).

5. Bandage pneumatique (1) selon l'une quelconque des revendications 1 à 4,
dans lequel la portion de coiffe (11) est faite en un caoutchouc ayant une propriété non conductrice.
